(19) **Europäisches Patentamt**

**European Patent Office**

**Office européen des brevets**

(11) **EP 1 079 206 A2**

(12) **EUROPEAN PATENT APPLICATION**

(43) Date of publication:
**28.02.2001 Bulletin 2001/09**

(51) Int Cl.⁷: **G01D 3/028**

(21) Application number: **00307313.7**

(22) Date of filing: **24.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.08.1999 GB 9920159**

(71) Applicant: **Cintex Limited**
**Milton Keynes, MK12 5QN (GB)**

(72) Inventor: **Gusterson, Steve, c/o Cintex Limited**
**Milton Keynes, MK12 5QN (GB)**

(74) Representative:
**Beresford, Keith Denis Lewis et al**
**BERESFORD & Co.**
**High Holborn**
**2-5 Warwick Court**
**London WC1R 5DJ (GB)**

(54) **Temperature compensation**

(57) There is described a method and apparatus for providing temperature compensation for a variation of output of an electronic component as the temperature of the component fluctuates. The method and apparatus is particularly applicable to the voltage output of a photodiode when operated at different temperatures, to provide a consistent voltage output for a predetermined light level incident on the photodiode. The method and apparatus is also usable in conjunction with other electronic components exhibiting performance variations with temperature. In a particularly advantageous embodiment, the temperature compensation method and apparatus is used in an X-ray inspection device wherein X-rays passing through a product under inspection are incident on a flourescent element which emits light onto a number of photodiodes.

FIG. 2

# Description

The present invention relates to methods and apparatus to effect temperature compensation to correct for variations in performance of electronic components at different temperatures. The invention particularly concerns a method of correcting for changes in output performance of photodiodes used in an inspection system, and an inspection apparatus including a temperature compensation system.

In many production processes, inspection of the product is carried out at various stages during the production process, and particularly immediately prior to final packaging and dispatch of the product. In processes for the commercial production of foodstuffs, for example, there is a requirement to detect unwanted or foreign bodies in the prepared foodstuff prior to its shipping from the factory. As an example, in the production of pre-packaged fish fillets or poultry products such as chicken breast fillets, the manufacturer wishes to be assured that no bones remain in the product, and likewise that the product is not contaminated by any other foreign body.

In a conventional installation for inspecting products such as foodstuffs, prepared meats, or other materials permeable to x-rays, there is provided a conveyor for transporting the packaged products. Above the conveyor a source of x-rays directs a beam of x-rays onto the conveyor surface, the x-ray beam being shaped by an aperture plate to form a narrow irradiation zone extending across the width of the conveyor. Beneath the conveyor, and aligned with the irradiation zone, a linear array of photodiodes is arranged to extend across the width of the conveyor. A phosphorescent strip is mounted above the array of photodiodes to extend transversely to the direction of the conveyor, so that x-rays from the source pass between the aperture plates, through the product and the conveyor, and strike the phosphorescent strip. Each point along the length of the phosphorescent strip emits visible light in proportion to the strength of the x-radiation striking the strip at that point, and this visible light is converted by the array of photodiodes into electrical signals. The signal from each photodiode represents the strength of the x-ray beam at the corresponding point across the width of the conveyor.

The density of the product modulates the intensity of the x-radiation striking the phosphorescent strip, and thus modulates the amount of visible light emitted at each point along the length of the phosphorescent strip. The array of photodiodes detect this modulated light emission, and by repeatedly sampling the outputs of the individual photodiodes in the linear array of photodiodes, the product is scanned as it passes through the irradiation zone. The outputs of the photodiodes are conventionally displayed as a video image of the passing product.

In the case of prepared meat products, any bones remaining in the meat will resist penetration of x-rays to a greater extent than will the meat, and thus the photodiode which falls in the "shadow" of the bone will be illuminated to a lesser extent than will photodiodes which receive x-rays passing through the meat. The presence of any bone or other body more resistant to x-rays can be detected in the video image as a dark area. The product concerned may then either be re-processed or discarded from the production line.

In an alternative use for the inspection equipment, detection of the absence of a product may be effected. For example, in the final inspection of multiply-packaged food items such as cakes or pies, the packages may pass through the irradiation zone and the photodiode outputs are used to form a video image of the packaged items. In addition to producing a real time image, the scanned data, which is presented as a series of "slices" of product, is processed by an image processing computer. By statistical techniques, a decision can be made as to the completeness, or fill level, of the pack, and if there are any dense inclusions (contamination) present.

The computer system can then automatically reject the product if deemed to be out of specification.

The data received by the image processing computer is required to be relatively constant over a period of time, such that changes in the data are substantially due to changes in the product, rather than changes in the detection system due to drift. A substantial amount of drift can occur due to temperature effect acting upon the individual diode outputs.

In a manual system, using human interpretation, such as may be seen in hand baggage inspection at airports, a similar line scanning X-ray system is used. An operator generally views an image where a decision is made as to if an object such as a gun is present. If the image is subject to drift, i.e., the image is getting lighter or darker, an operator can generally cope with quite large changes due to the intelligence of the human brain, or decide that the system should be paused, and a calibration be made.

In an automatic system, software is generally of a more limited capability than human intelligence. Furthermore, the system is less able to recognise when drift has occurred and a calibration is required. In a food processing line, it is not possible to pause production to allow frequent recalibration, even if the need for recalibration can be determined by machine.

Accurate automatic detection in either case is thus dependent on the reliability of the output of the photodiodes, and difficulties with inspection equipment of this type frequently occur in environments where temperature variations are experienced.

More specifically, a photodiode is a bipolar device which exhibits a certain range of difference in voltage across its contacts as the illumination level at the photodiode changes from dark to fully bright. For the same "dark" and "bright" light levels, the range of variation of the output voltage is substantially constant and independent of the operating temperature of the diode. This variation in the output voltage will be referred to as the "range" of the photodiode. However, as the operating temperature of the diode is increased or decreased, the "range" of the diode is displaced in a positive or negative direction, i.e. the difference between the upper and lower limit voltages of the range remains the same, but the centre point of the operating range is shifted up or down depending on the amount and direction of the temperature variation.

Thus, when the photodiode is illuminated with light at a constant level of illumination, but with the diode at a higher temperature, the voltage across the contacts of the diodes is changed as compared to the output voltage when the diode is at the lower temperature. If the operating temperature at the inspection station increases, then the outputs of all of the diodes are also increased for a given level of illumination. The situation can then arise that the "shadow" effect of a bone or foreign body may be insufficient to reduce the diode output below the detection threshold level, and thus detection of foreign bodies may be unreliable.

Furthermore, when the detector is being used to detect the absence of an inspected item, an increase in the output level of the photodiode due to a rise in its temperature may lead to the situation in which the photodiode output rises above the predetermined threshold level even when the product is present. Such a situation will cause erroneous indication of absence to be given, and rejection of packages which are actually complete.

In one conventional installation where products under inspection pass along a conveyor through an irradiation zone, and the outputs of the photodiodes are used to form a video image of the product, the interval between the passage of two successive products through the irradiation zone is used intermittently to recalibrate the system. This is achieved by reading the outputs of the diodes during this interval, and assuming that these outputs correspond to the maximum illumination of the diodes since at this time no product is interposed between the phosphorescent strip and the x-ray source. These calibration outputs are thus considered to be the upper limits of the ranges of the respective photodiodes, and since the ranges of the photodiodes are assumed to be constant, then the lower limit value of the range of each photodiode can be calculated and stored. The recalibration process is used to adjust the gain correction applied to each photodiode output, to preserve the required image brightness and contrast.

However, this correction method cannot be used when the product is a continuous stream, such as grain, flour, or other bulk products wherein no interruption of the product flow occurs, or interruptions only occur infrequently.

An objective of the present invention is to provide an inspection installation wherein the output of a detector, or the outputs of an array of detectors are automatically compensated for changes in the operating temperature of the detectors.

A further objective of the present invention is to provide an automatic inspection installation for inspecting a series of items which can indicate those items falling outside predetermined inspection parameters.

It is another objective of the present invention to provide a method of correcting an output signal from an electronic component to compensate for changes in operation of the component with changes in the temperature of the component.

According to a first aspect of the invention there is provided a method of compensating an output signal from an electrical component responsive to a first external parameter and whose response to the first external parameter varies with changes in an external environmental factor, wherein the electrical output of the component varies over a range from a lower limit value to an upper limit value as the first external parameter changes from a minimum to a maximum, and at least one of the limit values of the range changes with variations in the environmental factor, the method comprising the steps of:

    a) measuring and storing output values corresponding to upper or lower limit of the range at different values of the environmental factor to establish the relationship between the environmental factor and the upper or lower limit;
    b) measuring and storing output values corresponding to the upper and the lower limits of the range at the same value of the environmental factor to establish the extent of the range;
    c) measuring the current values of the output and the environmental factor;
    d) calculating a current value of a limit of the range on the basis of the measured current value of the environmental factor and the stored output values from step a);
    e) calculating the position within the range of the current output value on the basis of the extent of the range, and the calculated current value of the limit of the range.

A second aspect of the invention provides an inspection apparatus comprising a radiation source for illuminating an irradiation zone into which an object to be inspected may be placed, and detection means for detecting radiation exiting the irradiation zone, the detection means comprising an electrical detection component whose response to the radiation varies with changes in temperature, wherein the electrical output of the detection component varies over a range from a lower limit value to an upper limit value as the irradiation level changes from a minimum to a maximum, and at least one of the limit values of the range changes with variations in temperature, the apparatus comprising:

    first memory means for storing output values of the detection means corresponding to upper or lower limit of the range at different temperatures;

second memory means for storing output values corresponding to the upper and the lower limits of the range at a constant temperature to establish the extent of the range;

means for measuring the current values of the output;

temperature sensing means for measuring the ambient temperature;

first calculating means for calculating a current value of a limit of the range on the basis of the measured current temperature and the stored output values in the first memory means;

second calculating means for determining the position within the range of the current output value on the basis of the extent of the range, and the calculated current value of the limit of the range.

Embodiments of the present invention will now be described in detail with reference to the accompanying drawings, in which:

Figure 1 is a schematic perspective view of an inspection installation;

Figure 2 is a block diagram showing the circuitry of the sensor elements;

Figure 3 is a block diagram of the sensor control unit of a photodiode array module;

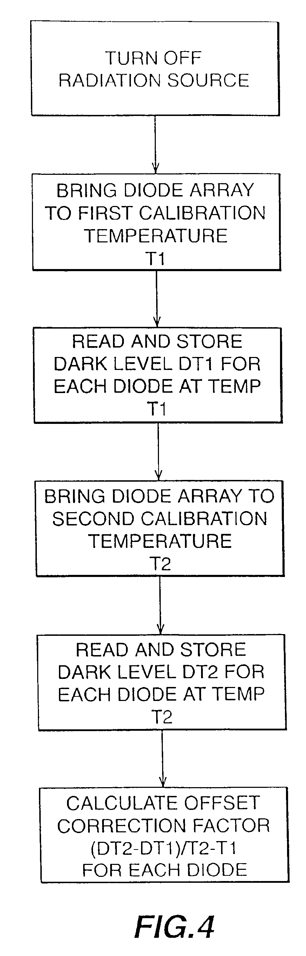

Figure 4 is a flow chart illustrating an initial calibration sequence;

Figure 5 is a flow chart showing the method of calculating the gain correction for each diode;

Figure 6 is a graphical illustration of the output voltages of the diodes in a sensor array;

Figure 7 is a graphical representation of the detection results; and

Figure 8 is a flow chart showing an alternative method for affecting temperature compensation.

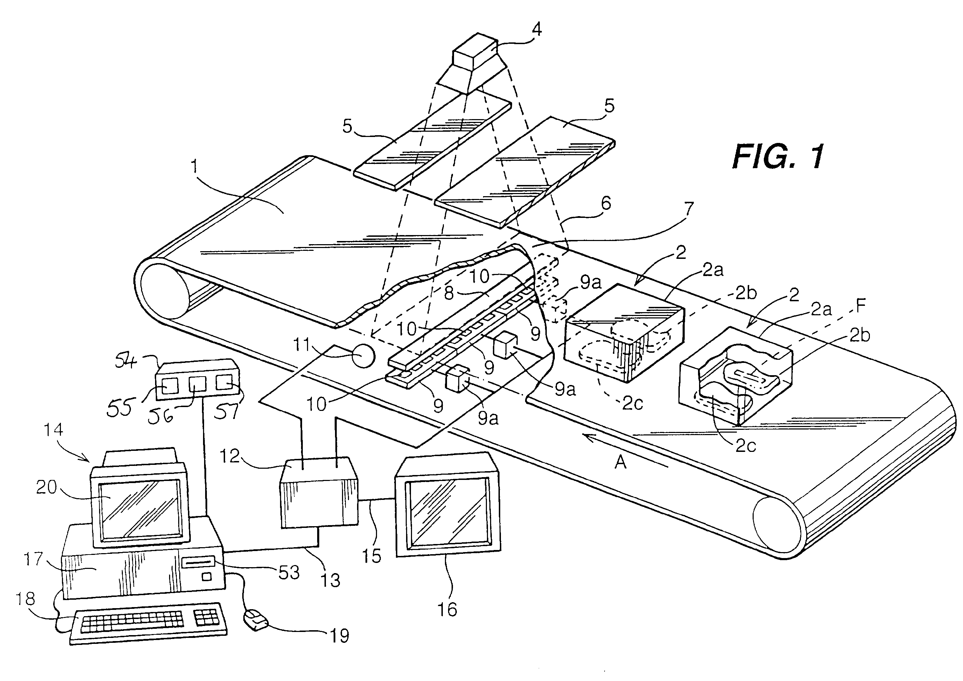

Referring to figure 1, an inspection installation is shown in which a conveyor 1 carries a series of products 2 at a known speed through the inspection installation in the direction of the arrow A. In the example shown, each product comprises a package 2a containing two items 2b and 2c.

Above the conveyor 1 is positioned a radiation source 4 and a pair of aperture plates 5. The aperture plates 5 are opaque to the radiation from the radiation source 4, and shape a radiation beam 6 from the source 4 so that it falls on the conveyor to define an irradiation zone 7 extending across the width of the conveyor.

Situated below the conveyor 1 and aligned with the irradiation zone 7 is a phosphorescent strip 8, below which is disposed a linear array 9 of photodiodes 10. The phosphorescent strip 8 is sensitive to the radiation beam 6, and emits visible light toward the photodiodes 10 when radiation from the source 4 impinges on the strip 8. The array 9 of photodiodes may be formed as a single module, or may comprise a number of modules arranged to form a linear array of photodiodes extending across the entire width of the conveyor 1. Each of the modules of the array 9 has associated with it a sensor module controller 9a, which carries out initial processing of the analogue outputs from the photodiodes 10 of the array 9. Adjacent to the array 9 of photodiodes 10 is a temperature sensing element 11 which provides an electrical signal corresponding to the ambient temperature of its location, and thus indicates the internal operating temperature of the array 9 of photodiodes 10.

Signals from the sensor module controllers 9a and from the temperature sensor 11 are fed to a sensor controller 12. The sensor controller 12 provides an output which is fed via a line 13 to a further processing apparatus (in this case a personal computer 14), and may optionally also provide a video output via a line 15 to a display terminal 16 to provide a real-time video image of the products passing along the conveyor. The sensor controller 12 may be a separate unit, as seen in figure 1, or may be a circuit board or card fitted internally in a larger processing apparatus such as an industrial controller or personal computer 14. The computer 14 comprises a processing unit 17, and input devices such as keyboard 18 and mouse 19, and a display 20.

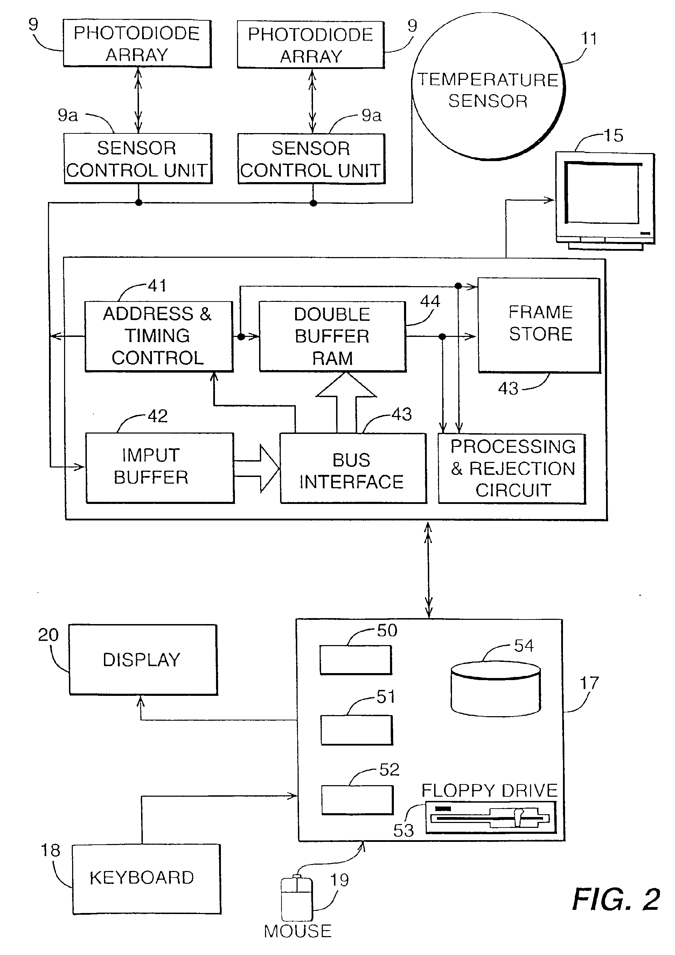

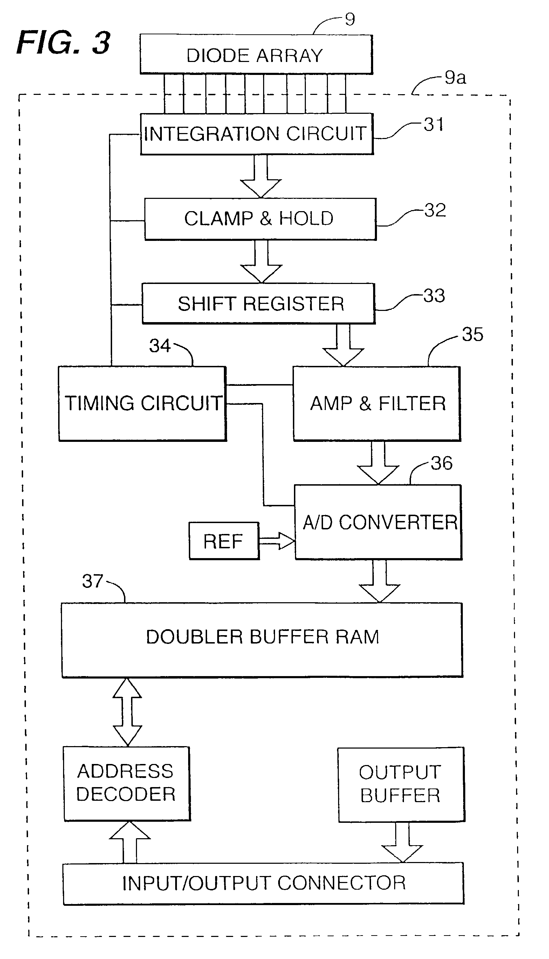

Figure 2 is a block diagram illustrating the structure of the sensor controller 12 of and figure 3 is a block diagram illustrating the structure of a sensor controller unit 9a. Referring now to figure 3, each photodiode 10 of the array 9 provides an analogue signal over a period of time to an integration circuit 31 of which adds the signals cumulatively, and passes signals to a clamp and hold circuit 32 and a shift register 33 which stores an analogue signal for each photodiode 10 indicative of the radiation dose striking the corresponding part of the phosphorescent strip 8 during that time period. This operation is carried out under the control of a timing circuit 34. From the shift register 33, the analogue photodiode signals are fed into an to an amplifier and filter 35, and then to an analogue to digital converter 36. From the converter 36 the signals are fed in turn into a buffer memory 37. In the example illustrated, the buffer memory 37 is a RAM memory capable of storing two lines of diode data. The first memory area contains the last completed scan line of diode output values, and the second stores the accumulating data of the line currently being scanned. For each line scan timing interval, a digital value representing the radiation falling on each of the photodiodes 10 of the array 9 is calculated, and is stored in the second area of the RAM memory 37. Therefore, at any one time, a complete line acquisition of a diode array scan is held in memory, whilst the following line is being assembled in a second part of the memory area. Once the second area is filled, the buffers are alternated, such that the previously completed line is discarded, and over-written by the next line to be assembled. The completed line in storage is that acted on by the processing means of the system, and must clearly be read out in its entirety before the subsequent line is completed and the buffers again alternate. The "lines" of diode data are then supplied to the sensor controller 12.

The sensor controller 12 is connected to all of the sensor control units 9a and to the temperature sensing element 11. The sensor controller 12 comprises six main components. An address and timing control circuit 41 communicates with the sensor control units 9a to request them in turn to send their stored radiation values for a particular timing interval, and also requests data from the temperature sensing element 11 corresponding to that timing interval. The signals are received in an input buffer 42 and are fed via a bus interface 43 to a double buffer RAM 44 a first part of which can store two sets of temperature and radiation values corresponding to all of the photodiodes 10 in the entire array 9. The stored signals correspond to the radiation values for all photodiodes 10, gathered in the last completed line, and the operating temperature of the diode array during recording of the values for that line. Input to the RAM 44 is controlled by the address and timing control circuit 41. The RAM memory in 44 is divided into two parts such that a first part has incoming data from the linear array written into it by the address and timing control 44. This area is subsequently read by the system microprocessor, and is acted upon statistically. The finally processed data from the system, including temperature and offset corrections are written to a second part of the RAM memory 44. This processed data can then be passed on to a frame store of display of a fully corrected and assembled image. Further bits within the RAM 44 indicate the accept and reject status of the current portion of the image, which are set concurrently with the writing of the final processed image data to the second output buffer of RAM 44. The first part, or input side, or RAM 44 is refreshed by data from the array in full once per line, and the second part, or output side, is updated via the microprocessor means in full once per line. Therefore, the input side contains "live" unprocessed and uncorrected diode array data, whilst the output side of RAM 44 contains final processed and corrected data.

The "raw" data stored in the RAM 44 is provided via an interface connection 13 to a processing unit 17 of a computer 14. The processing unit 17 is provided in a conventional manner with a display 20 and input device such as keyboard 18. The processing unit 17 comprises a processor 50, working memory (RAM memory) 51, ROM memory 52 for storing executable programmes, mass storage 54 and a disk drive 53 for loading executable programmes and data, and for retrieving data from the mass storage 54.

Processing of the "raw" data to produce temperature-corrected data is carried out in the processor 50 of the computer 14. Since the individual characteristics of the photodiodes may differ, a calibration step is necessary initially to compensate for differences in the responses of the photodiodes 10 to particular illumination levels. To provide a model for the calibration, it is assumed that the "range" of each photodiode is constant, but the "offset", i.e. the output value from the photodiode when no light falls on it, will vary with temperature. It may further be assumed that the variation of the "offset" is substantially linear with respect to temperature, in order to simplify the calculation. It is however foreseen that a more complicated relationship between offset and temperature may be incorporated in the correction algorithm. The offset component of the diode array signal can be considered as comprising two parts. The first is the natural "dark" output signal of the diode, which measured in terms of a 12 bit digitised signal, (0-4095) is normally in the region of 300 (where a fully saturated signal is generally achieved around 3800). Generally, conventional line scanning X-ray systems correct for this "dark" offset signal by an offline calibration process, prior to commencement of the inspection process, where the output from each diode is read under no X-ray dose, and stored, for subsequent subtraction from the live data during inspection. Therefore, the offset (nominally 300 value) of the input component is subtracted in real time for each diode, from all incoming values from the linear array to remove the "dark" component of the signal.

The second part of the "dark" signal is the temperature dependent component. For the typical value of 300 mentioned, which is obtained at normal room temperature, a substantial additional effect, due to temperature, can occur. A value as low as 200 for the offset can occur near zero degrees centigrade, and the offset value may rise to above 420 at approximately 50 degrees centigrade. This additional offset component, which is due to temperature effects acting on the silicon, is very significant (it may have a variation of some 220) when compared to the full scale data range (4095).

Although the first part of the "dark" signal can be determined at calibration time, it is impossible to monitor baseline drift due to temperature during operation as the signal now contains the dynamic component created by the X-rays impinging upon the detector. Therefore, the drift component due to temperature cannot be determined without recourse to additional correction means.

During the normal start up of a conventional system, the detector is automatically calibrated for dark response (offset) and the dynamic response (gain) of each individual diode. A reading is taken as described earlier at zero x-rays, and is stored for subtraction during operation. Once the system is in operation, the offset is subtracted and the resulting signal represents the X-ray level falling on each diode. However, if the temperature changes, the offset factor requires updating to a revised level. This is achieved by calculation using data acquired from the detector during manufacture. They are created in the following manner.

1. With the radiation source 4 inactive, and thus with no light being emitted by the phosphorescent strip 8, the photodiode array 9 is brought to a first calibration temperature T1 (typically 0 degrees C.).

2. Output values for all of the photodiodes 10 of the array 9 are read, converted to digital data in the sensor module controllers 9a, and passed to the sensor controller 12 together with the temperature information from the temperature sensing element 11. The sensor controller 12 stores this information in one part of the RAM memory 44. The data in RAM memory is then written to a file, in this case termed det_0.dat, this file containing an offset value for each diode in the array, acquired at low temperature.

3. The photodiode array is then brought to a second calibration temperature T2 (typically 60 degrees C.), again with the radiation source 4 inactive.

4. Output values for all of the photodiodes 10 of the array 9 are again read, converted to digital data in the sensor module controllers 9a, and passed to the sensor controller 12 together with the temperature information from the temperature sensing element 11. The data in RAM memory is then written to a file, in this case termed det_60.dat, this file containing an offset value for each diode in the array, acquired at a high temperature. The two temperature calibration files may be stored on a floppy disk or other portable medium and subsequently installed on the mass storage device 54 of the machine with which the detector is to be operated.

5. This information represents the "offset" value for each of the diodes in the array, at the two calibration temperatures T1 and T2. When the data is digitised as 12-bit data, and thus can have values of from 0 to 4095, typical offset values for the diodes lie between 200 and 400.

6. An "offset correction factor" is then calculated from these stored values, to produce an indication of the amount by which the offset for each diode varies with temperature. The calculation is made for each diode by dividing the difference between its two stored offset values by the difference between the two calibration temperatures T1 and T2. The result is the amount by which the offset of each diode will vary per degree rise or fall in temperature.

The inspection software within the machine may calculate the temperature correction factors during the starting up process as the system is put into inspection mode by the user. This reduces the need for special "off line" software to create a once-only correction "map" to be installed, via for example a floppy disk, at the same time as the detector. A single correction "map" file could alternatively be created via external software during manufacture and supplied to the user of the equipment, allowing start up of the system without the need to construct a map from the two calibration files. Another alternative is that a calibration "map" could be stored in electronic form within the detector itself, where correction is then performed or the data could be read into the main system microprocessor during startup from the detector.

In addition to the offset level of each diode being unique, and also varying with temperature, the output range, or span from each diode, termed as "Gain" will be different. It is not uncommon for a variation of over 50% signal strength to occur from the lowest to highest gain diode. In order for the outputs of all diodes in the array to be normalised, a "gain factor" is calculated for each diode in the array, and the output of the diode may then the corrected by applying the "gain factor".

In terms of the digital output of the diode array, it is desirable that the range of each diode be divided into the same number R of steps, so that each diode output will correspond to one of a predetermined number of illumination levels. In a typical application, the range of each diode is divided from the raw 12 bit data (4096 steps) into 256 steps. It is, however, foreseen the range may be divided into a different number of steps, from a different or similar input resolution depending on the commodity under inspection.

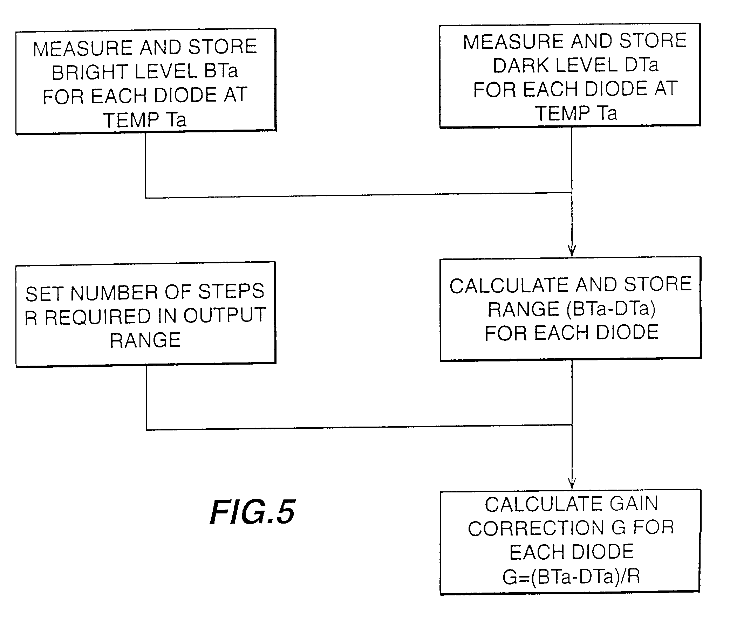

The first step in calculating the gain factor is to gather range data for each of the diodes, and this is normally done during the system start up process. However, the data acquired during Gain acquisition can be saved to system's storage device 54 and used during subsequent start up procedures. As the gain acquisition process takes 10-20 seconds, storage and reuse of the resulting data can speed subsequent machine start up operations significantly. The startup procedure can therefore be as little as 10 seconds where up to 40 seconds might be otherwise normal. Due to system ageing, a Gain calibration might still be required after a number of days operations. The steps for calculating the "gain factor" for each diode in the array are shown in the flow chart of figure 5, as follows:

7. With the radiation source activated, the output from the temperature sensing element 11, and the output from each diode 10 in the array 9, is captured and stored. These outputs from the diodes 10 represent the "bright level" outputs BTa at the ambient temperature Ta.

8. At the ambient temperature Ta where the equipment is to be used, and with the radiation source 4 deactivated, the output from the temperature sensing element 11, and the output from each diode 10 in the array 9, is captured and stored. These outputs from the diodes 10 represent the "dark level" outputs DTa at the ambient temperature Ta.

9. The dark level output DTa for each diode is then subtracted from the bright level output BTa for that diode, to give the range V. When the data is digitised as 12-bit data, and thus can have values of from 0 to 4095, typical bright level values for the diodes lie between 1000 and 4000, depending on X-ray dose while typical dark level values lie between 200 and 400. Thus, the range of a diode may be from 600 (i. e. 1000 - 400) to 3800 (i.e. 4000 - 200)

10. The required number of steps R in the output range V of each diode having been determined, the "gain correction factor" G for each diode is calculated by dividing the range by the required number of steps. For example, if the "bright level" of the diode is 3060, and the " dark level "is 500, then the range V of that diode is 2560. If this is to be divided into 256 calibrated output steps, then each step corresponds to an increment of 10 in the "raw" diode data output. The gain correction factor G for that diode is thus 10.

11. The gain correction factors for each of the diodes in the array are then stored along with the offset "dark level" files acquired at Ta. This allows for the offset and gain acquisition procedures to be omitted as described earlier during subsequent system start-up operations to save time. During acquisition the data is retained in memory as well as being written to file, as high speed correction of the diode data during run time requires fast access to the data tables. Subsequent "calibration free" startups require the tables to be loaded into memory from the stored files. Alternatively, the acquired offset and gain tables could be stored within other external media, such as a floppy disk, or be retained within the detector or system hardware itself, using non-volatile memory, thereby removing the need for external storage.

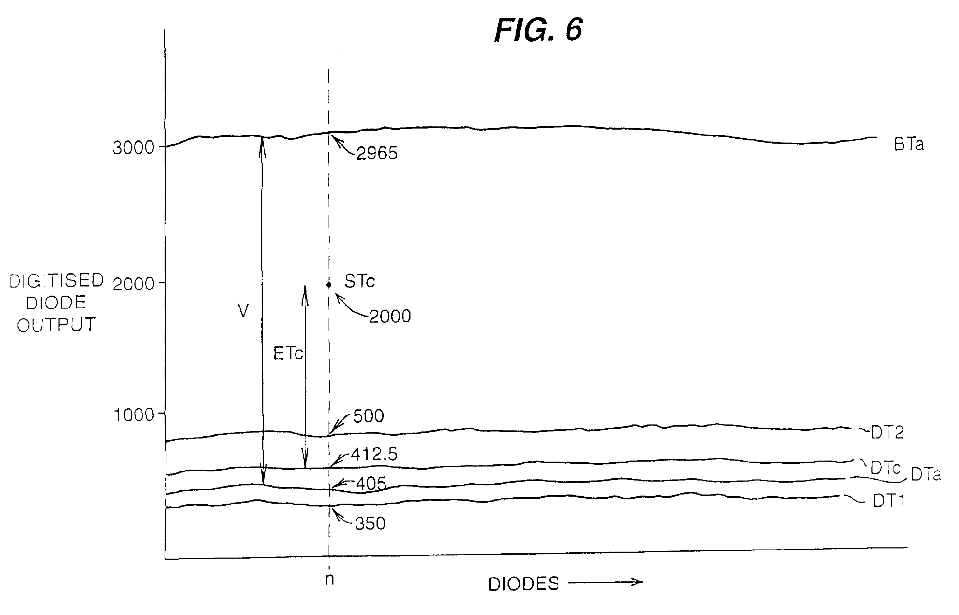

The information from step 5 or step 6, and the information from steps 7 and 8 or from step 10 may be recorded as a set of digital values, or may be expressed graphically as is seen in figure 6. At the known calibration temperatures T1 and T2, the dark values DT1 and DT2 are stored for each of the diodes in the array. Likewise, as the measured temperature Ta the dark value DTa and the bright value BTa are stored for each diode. These values are expressed in figure 6 as a graph of the digital diode output against the number of the diode, the range V of each diode being the vertical distance between the values DTa and BTa.

In the inspection installation illustrated in figures 1 to 3, correction of the data to take account of temperature variations is carried out in the system computer 14. The operation of the inspection installation is as follows:

Packages 2 placed on the conveyor 1 are moved through the irradiation zone 7 at a predetermined speed. Radiation from the source 4 passes through the products, and impinges on the phosphorescent strip 8 to produce visible light which is collected by the photodiodes 10 during each timing interval under the control of the timing circuit 34 of the sensor module controller 9a. The address and timing control 41 of the sensor controller 32 collects all the outputs of the photodiodes and from the temperature sensing element during each given time interval, and stores them in the RAM memory 44 of the sensor controller 12 as a current temperature value Tc and current sensor readings STc at that temperature. When all the data for a particular time interval is present in the RAM memory 44, it is transferred to the personal computer 14, while the data for the next time interval is being collected.

To convert the current sensor readings STc into corrected data, the current sensor reading must first be corrected for any change in the offset of the diode due to temperature differences, and must thereafter be corrected with the "gain correction factor" to ensure that each diode gives a consistent reading in relation to the amount of light falling on it.

To correct for offset, a notional "dark value" DTc for each diode at the current temperature Tc is calculated, from the offset correction factor calculated in step 6, the current temperature Tc and the known dark value DT1 or DTa and temperature T1 or Ta. This value DTc is then subtracted from the actual sensor reading STc at the current temperature, to produce a value ETc indicating the amount by which the current diode reading exceeds the current dark value. Using the values of DT1, DT2, DTa, T1, T2, Ta, and Tc shown in figure 6, if the temperature Ta at set-up was 22 degrees C, and the current temperature Tc is 25 degrees C, then the current dark value DTc is calculated as 412.5, and thus the value ETc equals 1587.5. The formula for calculating DTc from DTa is:

$$DTc = DTa + (Tc - Ta)\frac{DT2 - DT1}{T2 - T1}$$

Clearly, if Tc is less than Ta, the second term in the formula becomes negative and DTc will be less than DTa. To correct for differences in gain between the individual diodes in the array, the "gain correction factor" is applied to the value ETc to give, for each diode, the step R in the range V corresponding to the value ETc. As an example, for a diode n shown on the graphical illustration of figure 6, the range V of the diode corresponds to BTa - DTa, in this case 2965 - 405, i.e 2560. If R is 256, i.e. the range V is divided into 256 steps, then each increment of 10 in the output of the diode corresponds to one step. The current reading STc of the diode is 2000, giving a value ETc of 1587.5 when DTc is subtracted, which corresponds to 159 steps. The normalised output level of the diode is thus 159.

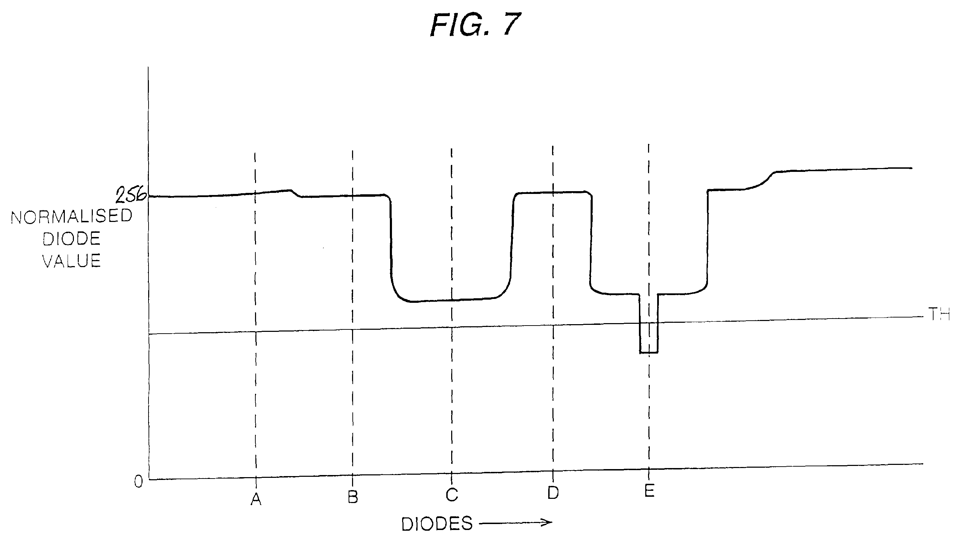

By performing similar calculations for each of the diodes in the array and plotting them on axes corresponding to the normalised value and the diode position within the array, a graph such as that shown in figure 7 can be obtained which indicates the amounts of radiation passing through the product and various points across the width of the conveyor belt. At diode position A, the radiation misses the package 2 and a high level of radiation is detected. At diode position B, the radiation is passing through the packaging material but not through the product, and thus the detected level is lower than that at diode position A. At diode position C, the radiation is passing through the packaging and through the product item 2c, and thus the reading at the diode is reduced to a low level. Diode position D corresponds to the gap between the two product items 2a and 2b, and results in a detected level similar to that at diode position B.

At diode position E, however, the normalised value of the diode output is reduced to below the level seen at C by the presence of a foreign body F in the product item 2b.

To detect such foreign bodies F automatically, the normalised values of the diode outputs may be input into a comparator or software and the output processing means may be used to trigger an alarm signal when a normalised value falls below a predetermined threshold level TH. Such a comparator may be implemented in software within the computer 14, and the display 20 of the computer may provide a visual representation of the normalised output values from the diode array for one or more timing periods as an image, and may indicate when a normalised value fails to reach the required threshold level.

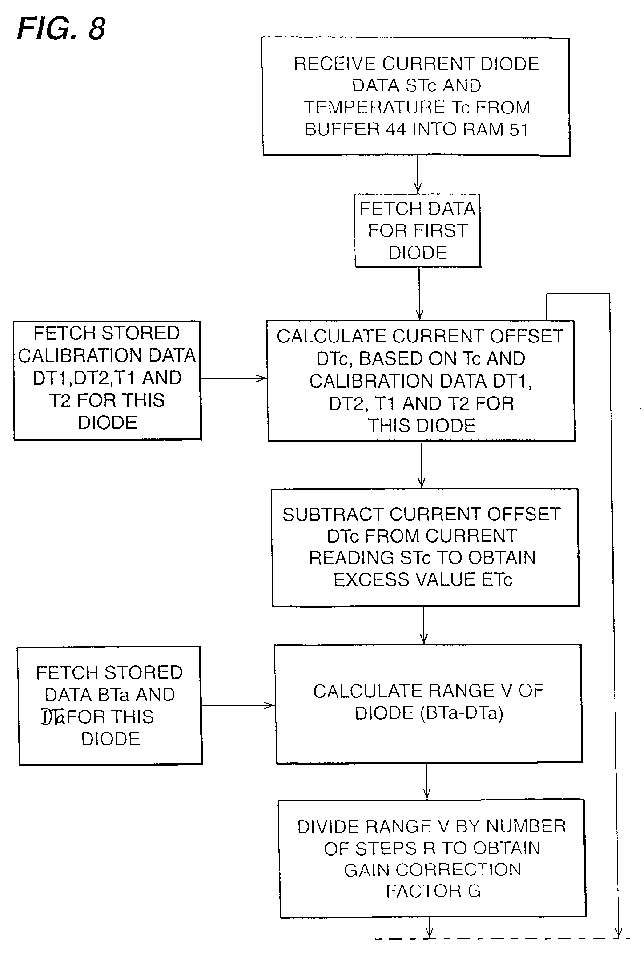

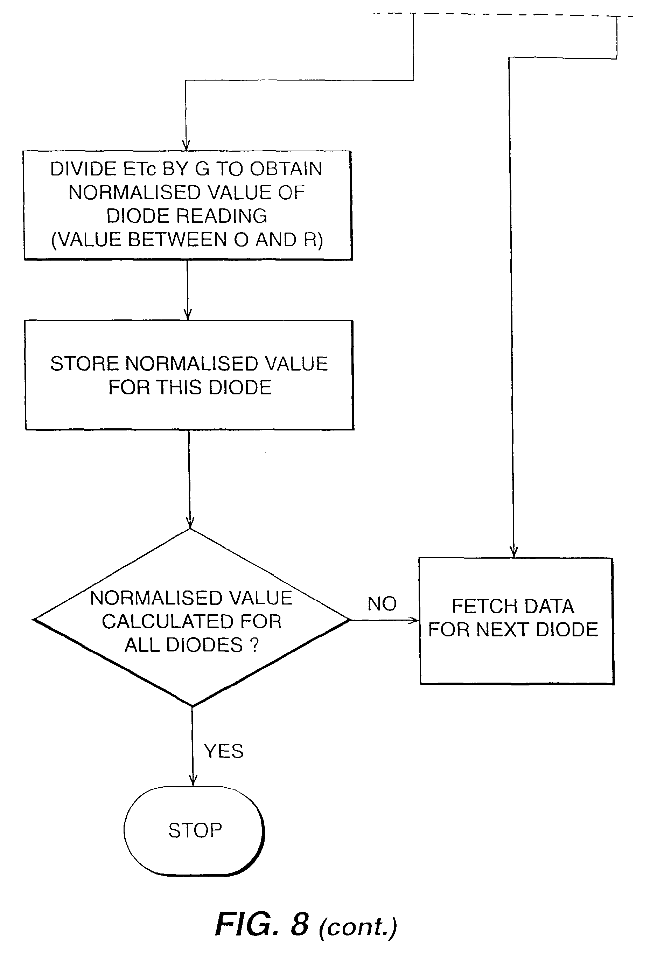

Figure 8 is a flow chart showing an alternative method for calculating the normalised value for each diode of the array. In figure 8, the method starts with the temperature Tc and diode data for the current timing period STc being sent from the buffer 44 of the sensor controller 12 to the RAM memory 51 of the personal computer 14. The data from the factory calibration, DT1, DT2, T1 and T2 is stored in the computer 14, on the mass storage 54. Under the control of a programme stored in the personal computer 14, either in the mass storage 54 or in the RAM memory 51, the current temperature Tc and the diode data STc for the first diode of the array is read from the RAM memory 51. The calibration values DT1 and DT2 for that diode, and the calibration temperatures T1 and T2 are read from the memory 54, and the processor 15 then calculates the current offset DTc.

The process then moves on to subtract the current offset DTc from the current diode output value STc, to obtain the excess value ETc.

At the next step, the set-up data BTa and DTa are fetched from memory, and the range V of the diode is calculated. The range V is then divided by the number of steps R to calculate the gain correction factor G.

The excess value ETc is then divided by the gain correction factor G to obtain the normalised value, which is then stored in the RAM memory 51. This process is then repeated until normalised values of the output have been stored for each diode in the array.

In this method, the current offset value DTc is calculated during each timing period based on the original calibration data, rather than by applying and offset correction factor to the current temperature reading Tc. Furthermore, the range V and the gain correction factor G are both calculated for each diode that each timing period. It is foreseen that these values may be stored in memory for simple retrieval, rather than be calculated each time.

In the method illustrated in figure 8, as the current temperature Tc varies, the current offset value DTc will be recalculated at each timing period and the diode outputs will be corrected so that changes in the operating temperature of the diode array will not lead to differences in the normalised output values on which detection of foreign bodies is based.

In figure 7, detection of a foreign body by the normalised output value falling below a set threshold value is illustrated. It is also to be understood that comparator means may be provided, implemented either as hardware or as software in the computer 14, additionally or alternatively to compare the normalised output values to a predetermined maximum value, and to give an output when the normalised value of a diode exceeds the predetermined maximum value. Such a situation may occur when a product item is absent from its package. An indicator 54 may be provided (see Figure 1) with three displays 55, 56, and 57 to signify detection above a preset upper threshold, detection below a preset lower threshold, and detection within a range between the two present thresholds respectively, with this latter indicating an acceptable product.

In the embodiments described above, the normalised values of the diode outputs have been compared with predetermined threshold values in order to deduce information relating to the product under inspection. It is however foreseen that the diode output data could be processed in other ways to extract meaningful information regarding the product. For example, a number of lines each comprising output data from the array of photodiodes can be considered as an image, and treated by image processing techniques such as edge or feature extraction, or by other morphological techniques to produce meaningful output data.

In the foregoing, offset correction has been effected on the basis of measurements of the "dark" value of each diode at the calibration temperatures T1 and T2. It will be readily appreciated that the offset may alternatively be established by measuring "bright" values BT1 and BT2 for each diode at the calibration temperature T1 and T2, and calculating the current value BTc for the upper limit of the range of each diode rather than the current value DTc of the lower limit of the range. Furthermore, the calibration process may alternatively be effected by measuring and storing values of DT1, DT2 and BT1 and BT2 for each diode. This data permits an interpretation and for extra polation calculation to be made to correct for variation in the extent of the range of each diode with temperature, for example by assuming a linear relationship between diode range and temperature.

The correction technique may be applied to other sensors than photodiodes, for example to piezoelectric pressure sensors which exhibit changes in property with temperature, or to other devices which sense one parameter but are affected by variations in another.

**Claims**

1. A method of compensating an output signal from an electrical component (10) responsive to a first external parameter and whose response to the first external parameter varies with changes in an external environmental factor, wherein the electrical output of the component varies over a range (R) from a lower limit value to an upper limit value as the first external parameter changes from a minimum to a maximum, and at least one of the limit values of the range changes with variations in the environmental factor, the method comprising the steps of:

    a) measuring and storing output values corresponding to upper or lower limit of the range at different values of the environmental factor (DT1, DT2) to establish the relationship between the environmental factor and the upper or lower limit;
    b) measuring and storing output values corresponding to the upper (BTa) and the lower limits (DTa) of the range at the same value of the environmental factor to establish the extent of the range;
    c) measuring the current values of the output (STc) and the environmental factor (Tc);
    d) calculating a current value of a limit (DTc) of the range on the basis of the measured current value of the environmental factor (Tc) and the stored output values from step a);
    e) calculating the position within the range (R) of the current output value (STc) on the basis of the extent of the range, and the calculated current value of the limit (DTc) of the range.

2. A method of compensating an output signal from an electronic component (10) responsive to a first external parameter and whose response to the first external parameter varies with changes in an external environmental factor, wherein the electrical output of the component varies over a range (R) from a lower limit value to an upper limit value as the first external parameter changes from a minimum to a maximum, and at least one of the limit values of the range changes with variations in the environmental factor, the method comprising the steps of:

    a) storing in a memory first (BTa) and second (DTa) output values corresponding to the upper and lower limits of the range, respectively, for a first value of the environmental factor;
    b) storing in a memory a third output value corresponding to either the upper (BT1, BT2) or the lower (DT1, DT2) limit of the range for a second value of the environmental factor;
    c) measuring a current output value (STc) and a current value of the environmental factor (Tc);
    d) calculating a value for the upper (BTc) or the lower (DTc) limit of the range at the current value of the environmental factor (Tc), on the basis of the stored first and third (BTa, BT1), or second and third (DTa, DT1) output values, respectively;
    e) calculating the difference between the current output value (STc) and the calculated limit value (BTc, DTc); and
    f) determining the position of the current output value (STc) within the range on the basis of the calculated difference.

3. A method according to claim 1 or claim 2 wherein the first, second and third output values are measured and stored during a calibration routine.

4. A method according to any preceding claim, wherein the current value of the environmental factor (Tc) is measured at predetermined time intervals, and the calculation of step d) is carried out after each measurement.

5. A method according to any preceding claim wherein the third output value corresponds to the lower limit of the range.

6. A method according to any preceding claim, further including the steps of:

    establishing a threshold at a predetermined position within the range;
    comparing the calculated position within the range of the current output value (STc) with the established threshold; and

providing an output dependent on the result of the comparison.

7. A method according to any preceding claim wherein the electronic component is a photodiode, the first external parameter is an intensity of illumination on the diode, and the environmental factor is temperature.

8. An inspection apparatus comprising a radiation source for illuminating an irradiation zone into which an object to be inspected may be placed, and detection means for detecting radiation exiting the irradiation zone, the detection means comprising an electrical detection component whose response to the radiation varies with changes in temperature, wherein the electrical output of the detection component varies over a range (R) from a lower limit value to an upper limit value as the irradiation level changes from a minimum to a maximum, and at least one of the limit values of the range changes with variations in temperature, the apparatus comprising:

first memory means for storing output values of the detection means corresponding to upper or lower limit of the range at different temperatures (DT1, DT2);
second memory means for storing output values corresponding to the upper (BTa) and the lower limits (DTa) of the range at a constant temperature to establish the extent of the range;
means for measuring the current values of the output (STc);
temperature sensing means for measuring the ambient temperature (Tc);
first calculating means for calculating a current value of a limit (DTc) of the range on the basis of the measured current temperature (Tc) and the stored output values in the first memory means;
second calculating means for determining the position within the range (R) of the current output value (STc) on the basis of the extent of the range, and the calculated current value of the limit (DTc) of the range.

9. An inspection apparatus according to claim 8 wherein the first calculating means is adapted to calculate a current value of the lower limit (DTc) of the range.

10. An inspection apparatus according to claim 8 or claim 9, further comprising processor means to control the operation of the first and second memory means and the first and second calculating means.

11. An inspection apparatus according to claim 10, further including a timing means, and wherein the processor means causes the temperature sensing means to sense ambient temperature at predetermined time intervals, and causes the first calculating means to calculate the current limit value (DTc) after each temperature sensing operation.

12. An inspection apparatus according to any of claims 8 to 11, wherein the detection means comprises a array of photodiodes, and wherein the first and second memory means are adapted to store respective output values for each of the diodes in the array.

13. An inspection apparatus according to claim 12, wherein the outputs of the photodiodes in the array are sequentially stored in a buffer memory prior to being input to the first and second calculating means.

14. An inspection apparatus according to claim 13 wherein the buffer memory comprises first and second parts, each part of the buffer memory being capable of storing an output value for each photodiode in the array.

15. An inspection apparatus according to any of claims 8 to 14 wherein the radiation source is a source of x-rays, and the detection device comprises conversion means to convert x-rays to visible light, and a photodiode responsive to the visible light.

16. A data carrier carrying processor-implementable instructions for carrying out a method according to any of claims 1 to 7.

17. A signal carrying processor-implementable instructions for carrying out a method according to any of claims 1 to 7.

**FIG. 1**

FIG. 2

**FIG. 3**

DIODE ARRAY — 9

— 9a

INTEGRATION CIRCUIT — 31

CLAMP & HOLD — 32

SHIFT REGISTER — 33

34 — TIMING CIRCUIT

35 — AMP & FILTER

36 — A/D CONVERTER

REF

37 — DOUBLER BUFFER RAM

ADDRESS DECODER

OUTPUT BUFFER

INPUT/OUTPUT CONNECTOR

```
┌─────────────────────────┐
│       TURN OFF          │
│   RADIATION SOURCE      │
└─────────────────────────┘
             │
             ▼
┌─────────────────────────┐
│   BRING DIODE ARRAY     │
│   TO FIRST CALIBRATION  │
│      TEMPERATURE        │
│          T1             │
└─────────────────────────┘
             │
             ▼
┌─────────────────────────┐
│     READ AND STORE      │
│   DARK LEVEL DT1 FOR     │
│   EACH DIODE AT TEMP     │
│          T1             │
└─────────────────────────┘
             │
             ▼
┌─────────────────────────┐
│  BRING DIODE ARRAY TO   │
│  SECOND CALIBRATION     │
│      TEMPERATURE        │
│          T2             │
└─────────────────────────┘
             │
             ▼
┌─────────────────────────┐
│     READ AND STORE      │
│   DARK LEVEL DT2 FOR     │
│   EACH DIODE AT TEMP     │
│          T2             │
└─────────────────────────┘
             │
             ▼
┌─────────────────────────┐
│   CALCULATE OFFSET      │
│  CORRECTION FACTOR      │
│    (DT2-DT1)/T2-T1      │
│    FOR EACH DIODE       │
└─────────────────────────┘
```

## FIG.4

```
┌─────────────────────────┐          ┌─────────────────────────┐
│   MEASURE AND STORE     │          │   MEASURE AND STORE     │
│   BRIGHT LEVEL BTa      │          │   DARK LEVEL DTa        │
│   FOR EACH DIODE AT     │          │   FOR EACH DIODE AT     │
│       TEMP Ta           │          │       TEMP Ta           │
└─────────────────────────┘          └─────────────────────────┘

┌─────────────────────────┐          ┌─────────────────────────┐
│   SET NUMBER OF STEPS   │          │   CALCULATE AND STORE   │
│  R REQUIRED IN OUTPUT   │          │   RANGE (BTa-DTa)       │
│        RANGE            │          │    FOR EACH DIODE       │
└─────────────────────────┘          └─────────────────────────┘
```

**FIG.5**

```
                                     ┌─────────────────────────┐
                                     │   CALCULATE GAIN        │
                                     │  CORRECTION G FOR       │
                                     │     EACH DIODE          │
                                     │   G=(BTa-DTa)/R         │
                                     └─────────────────────────┘
```

FIG. 6

EP 1 079 206 A2

## FIG. 7

## FIG. 8

RECEIVE CURRENT DIODE
DATA STc AND
TEMPERATURE Tc FROM
BUFFER 44 INTO RAM 51

↓

FETCH DATA
FOR FIRST
DIODE

↓

FETCH STORED
CALIBRATION DATA
DT1,DT2,T1 AND
T2 FOR THIS
DIODE

→

CALCULATE CURRENT OFFSET
DTc, BASED ON Tc AND
CALIBRATION DATA DT1,
DT2, T1 AND T2 FOR
THIS DIODE

↓

SUBTRACT CURRENT OFFSET
DTc FROM CURRENT
READING STc TO OBTAIN
EXCESS VALUE ETc

↓

FETCH STORED
DATA BTa AND
DTa FOR THIS
DIODE

→

CALCULATE RANGE V OF
DIODE (BTa-DTa)

↓

DIVIDE RANGE V BY NUMBER
OF STEPS R TO OBTAIN
GAIN CORRECTION
FACTOR G

18

DIVIDE ETc BY G TO OBTAIN
NORMALISED VALUE OF
DIODE READING
(VALUE BETWEEN O AND R)

STORE NORMALISED VALUE
FOR THIS DIODE

NORMALISED VALUE
CALCULATED FOR
ALL DIODES ?

NO

FETCH DATA
FOR NEXT DIODE

YES

STOP

*FIG. 8 (cont.)*